# FASCICULE DE BREVET EUROPEEN

(11) **EP 3 682 138 B1**
(45) Date de publication et mention de la délivrance du brevet: **27.10.2021**
(21) Numéro de dépôt: 18780188.1
(22) Date de dépôt: 12.09.2018
(51) Int. Cl.: F16H 1/28

(54) **PIVOT POUR PALIER LISSE**
DREHZAPFEN FÜR EIN GLEITLAGER
PIVOT FOR A SLIDING BEARING

(30) Priorité: 12.09.2017 FR 1758424
(43) Date de publication de la demande: 22.07.2020
(73) Titulaire: Safran Transmission Systems, 92700 Colombes (FR)
(72) Inventeur: DOMBEK, Alexis, Claude, Michel, 77550 Moissy-Cramayel (FR); LEMOINE, Julie, Marie, Renée, 77550 Moissy-Cramayel (FR)
(74) Mandataire: Ernest Gutmann - Yves Plasseraud S.A.S.
(86) Numéro de dépôt international: PCT/FR2018/052234
(87) Numéro de publication internationale: WO 2019/053372

(56) Documents cités:
- EP-A1- 1 538 355
- EP-A1- 2 607 695
- EP-A2- 2 270 361

## Description

### DOMAINE

La présente invention concerne un pivot pour palier lisse et plus particulièrement un pivot destiné à être intégré dans un train d'engrenages épicycloïdal d'une turbomachine telle qu'un turboréacteur ou un turbopropulseur.

### CONTEXTE

Classiquement un train d'engrenages épicycloïdal comprend des pignons satellites en prise avec une couronne externe et un pignon central, comme dans le document EP 2 270 361 A2.

Les pignons satellites sont portés par un porte-satellite et montés libre en rotation sur des pivots. Un tel train d'engrenages épicycloïdal peut servir notamment à la transmission de puissance d'un arbre moteur tel que l'arbre d'un compresseur basse pression relié au pignon central, à une roue de soufflante reliée au porte-satellites. L'utilisation d'un pivot formant avec un pignon satellite un palier lisse permet de réduire l'encombrement et la masse et offre une durée de vie quasiment infinie en comparaison d'un palier à roulements à billes, sous la réserve qu'ils soient constamment alimentés en huile de lubrification et de refroidissement.

Chaque pivot est formé par une paroi annulaire délimitant un passage axial et comprenant une première et une seconde rainures annulaires débouchant axialement dans des sens opposés. Chaque rainure est délimitée par deux branches annulaires coaxiales interne et externe formées aux extrémités axiales de la paroi annulaire. Les branches interne et externe de chaque rainure confère une souplesse aux extrémités axiales du pivot limitant ainsi la déformation du pivot et assurant ainsi un bon alignement radial des dentures des pignons satellites avec le pignon central et la couronne externe. Toutefois, on a observé des désalignements non identiques entre les portées amont et les portées aval d'un même pivot. Des déplacements tangentiels, dus aux couples appliqués, et/ou radiaux, dus à la force centrifuge, et non symétriques entre l'amont et l'aval le long de l'axe de rotation X, ont été constatés sur des pivots. Bien évidemment, cela est dommageable car susceptible d'affecter la fiabilité du pivot et l'efficacité du palier et par suite sur celle du train d'engrenages.

### RESUME DE L'INVENTION

La présente invention concerne un pivot pour palier lisse de train épicycloïdal, comprenant une paroi annulaire délimitant un passage axial et comprenant une première et une seconde rainures annulaires débouchant axialement dans des sens opposés et chacune délimitée par deux branches annulaires coaxiales interne et externe formées aux extrémités axiales de la paroi annulaire, caractérisé en ce qu'il comprend une pluralité de premiers orifices débouchant à une première extrémité dans la première rainure annulaire et à une seconde extrémité opposée dans la seconde rainure annulaire, ces orifices étant réalisés sur un secteur angulaire compris entre 5° et 330°.

Selon l'invention, en réalisant des orifices sur un secteur angulaire donné, on peut apporter plus de souplesse au niveau de ce secteur angulaire du pivot comparativement au reste du pivot ce qui autorise une plus grande déformation locale du pivot.

Lorsque le pivot est intégré à un train d'engrenage épicycloïdal, il est ainsi possible d'obtenir un meilleur alignement des dentures des pignons satellites en prise avec les dentures des planétaires interne et externe. En effet, dans un palier lisse dépourvu d'orifices comme dans l'invention, l'amont et l'aval du palier lisse se déforment différemment, ce qui entraine un désalignement des dentures par rapport à l'axe du train d'engrenages épicycloïdal dans lequel est monté le palier lisse. En ajoutant de la souplesse à un secteur angulaire donné du palier, celui-ci se déforme moins, ce qui permet d'équilibrer les déformations entre les deux côtés amont et aval du palier et conduit à un meilleur alignement des dentures par rapport à l'axe du train d'engrenages.

Les orifices du pivot peuvent être réalisés par une opération de simple perçage ce qui s'avère simple à réaliser.

Selon une autre caractéristique, un lamage est prévu au débouché d'au moins l'une de la première extrémité et de la seconde extrémité de chacun des premiers orifices.

Selon une première variante, les premiers orifices sont sensiblement rectilignes. Dans une deuxième variante, les premiers orifices sont inclinés par rapport à l'axe du passage axial, de préférence d'un angle compris entre 0° et 30°. Cette seconde variante permet de mieux répartir la déformation circonférentielle du pivot créée par l'adjonction des orifices en comparaison de la première variante. De plus, elle permet également une réduction de masse plus importante puisque chaque orifice présente une longueur plus importante que dans la première variante à nombre d'orifices constant et diamètres identiques.

Selon une autre caractéristique de l'invention, des seconds orifices peuvent être répartis de part et d'autre des premiers orifices et déboucher à une première extrémité dans la première rainure et à une seconde extrémité dans la seconde rainure, les seconds orifices ayant des caractéristiques dimensionnelles différentes des caractéristiques dimensionnelles des premiers orifices. Ces seconds orifices permettent d'alléger la masse du pivot.

L'invention concerne également un train épicycloïdal d'une turbomachine à gaz pour aéronef, comprenant une couronne extérieure et des pignons satellites en prise avec le pignon central et avec la couronne extérieure et montés chacun libre en rotation sur un porte-satellites, les pignons satellites pouvant chacun tourner autour d'un axe de satellite par l'intermédiaire d'un pivot tel que décrit précédemment, l'axe du pivot étant coaxial à l'axe du pignon satellite.

Egalement, l'invention concerne une turbomachine à gaz pour aéronef comprenant un train d'engrenages dont le pignon central entoure et est solidaire en rotation d'un arbre du compresseur de la turbomachine. Plus spécifiquement, la couronne extérieure peut être solidaire d'un carter ou virole annulaire statique du compresseur basse pression. Dans cette configuration, le train d'engrenages épicycloïdal forme un réducteur puisque la vitesse de rotation du porte-satellites est inférieure à celle du pignon central.

Bien évidemment, l'invention est également applicable à des trains d'engrenages épicycloïdaux tels que par exemple des trains d'engrenages épicycloïdaux dans lesquels la couronne extérieure est également mobile en rotation.

L'invention est en outre applicable à un train d'engrenage épicycloïdal dans lequel le porte-satellites est fixe et la couronne extérieure est mobile. Ce type de montage est également appelé train réducteur planétaire.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue schématique en perspective d'une turbomachine selon la technique connue ;
- la figure 2 est une vue schématique en coupe d'un train d'engrenages épicycloïdal destiné à être utilisé dans une turbomachine selon la figure 1 ;
- la figure 3 est une vue schématique en coupe d'un pignon satellite et du porte satellites de la figure 2 ;
- la figure 4 est une vue schématique en coupe d'un pivot autour duquel tourne un pignon satellite ;
- la figure 5 est une vue schématique d'un premier mode de réalisation ;
- les figures 6A, 6B et 6C sont des vues schématiques de plusieurs variantes de réalisation d'un second mode de réalisation ;
- la figure 7 est un schéma de montage de pivots dans une configuration du type réducteur à train épicycloïdale ; et
- la figure 8 et un schéma de montage de pivots dans une configuration du type différentiel.

### DESCRIPTION DETAILLEE

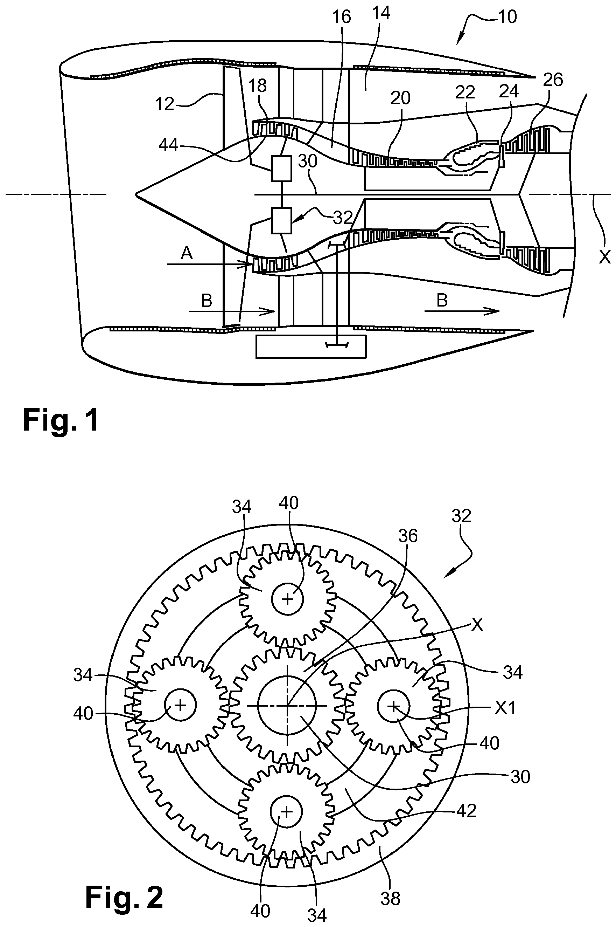

On se réfère tout d'abord à la figure 1 qui représente une vue schématique d'une turbomachine 10 selon la technique connue comprenant d'amont en aval une roue de soufflante 12 dont la rotation induit une accélération d'air dans une veine annulaire d'air secondaire 14 (flux d'air B) entourant successivement une veine annulaire d'air primaire 16 (flux d'air A) s'écoulant dans un compresseur basse pression 18, un compresseur haute pression 20, une chambre annulaire de combustion 22, une turbine haute pression 24 et une turbine basse pression 26. Classiquement, la turbine basse pression 26 entraine en rotation le rotor 30 du compresseur basse pression lequel est relié à la roue de soufflante 12. Toutefois, pour limiter la vitesse de rotation de la roue de soufflante 12 relativement à la vitesse de rotation du rotor 30 du compresseur basse pression 18, il est connu de monter un train d'engrenages épicycloïdal 32 radialement à l'intérieur du compresseur basse pression 18, ce train d'engrenages épicycloïdal 32 étant alors qualifié de réducteur du fait de sa fonction de réduction de la vitesse de rotation.

Un tel train d'engrenages 32 comprend des pignons satellites 34 en prise avec un planétaire interne 36 ou pignon central et avec un planétaire externe 38 ou couronne extérieure, les planétaires interne 36 et externe 38 étant en coaxiaux à l'axe X de la turbomachine. Chaque pignon satellite 34 est monté libre en rotation autour d'un pivot 40 et les pivots 40 sont solidaires d'un porte-satellites 42. Dans un réducteur épicycloïdal, le pignon central 36 est solidaire en rotation de l'arbre 30 du compresseur basse pression 18 qui forme une entrée du train d'engrenages, le porte satellites 42 solidaire de la roue de soufflante 12 forme une sortie de réduction de la vitesse du train d'engrenages épicycloïdal et la couronne extérieure 38 est rendue solidaire d'un carter 44 de la turbomachine délimitant intérieurement une zone annulaire dans laquelle est montée le train d'engrenages.

L'invention qui sera décrite ultérieurement s'applique ainsi non seulement à un train d'engrenages 32 du type réducteur mais également à une train d'engrenages dans lequel la couronne extérieure 38 est reliée en rotation à une seconde roue de soufflante, la couronne extérieure 38 et le porte satellites étant configurés/dimensionnés pour tourner dans des sens opposés.

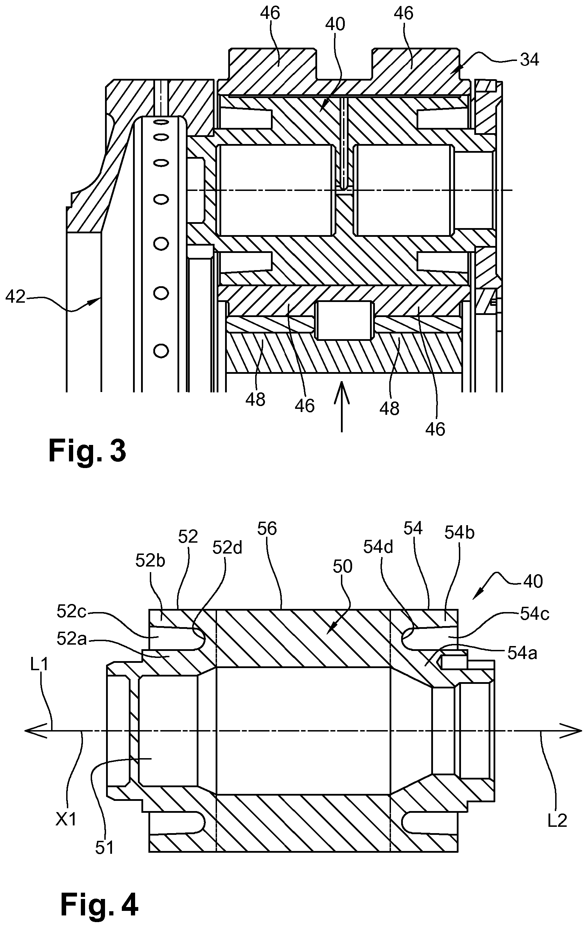

La figure 3 représente une vue en coupe d'un pivot 40 autour duquel est engagé un pignon satellite 34 de manière à former un palier lisse, les dentures périphériques 46 du pignon satellite 34 étant représentées en prise avec les dentures périphériques 48 du pignon central 36 mais pas avec la couronne extérieure qui n'est pas représentée sur cette figure.

Comme cela est bien visible sur cette figure et plus spécifiquement sur la figure 4, le pivot 40 comprend une paroi annulaire 50 qui délimite radialement vers l'intérieur un passage axial 51 s'étendant selon l'axe X1 du pivot. Cette paroi annulaire 50 comprend une première partie annulaire 52 d'extrémité et une seconde partie annulaire 54 d'extrémité opposée à la première partie 52. La première partie annulaire 52 et la seconde partie annulaire 54 sont séparées par une partie annulaire intermédiaire 56 ou intercalaire. La première partie annulaire 52 comprend deux branches annulaires radialement interne 52a et externe 52b coaxiales délimitant une première rainure 52c ou gorge annulaire débouchant dans un premier sens L1 de la direction axiale X1. De même la seconde partie annulaire 54 comprend deux branches annulaires radialement interne 54a et externe 54b coaxiales délimitant une seconde rainure 54c ou gorge annulaire débouchant dans un second sens L2 de la direction axiale X1. Sur la figure 4, la branche radialement interne 52a de la première partie annulaire 52 et la branche radialement interne 54a de la seconde partie annulaire 54 s'étendent axialement sur une distance supérieure, respectivement, à la branche radialement externe 52b de la première partie annulaire 52 et à la branche radialement externe 54b de la seconde partie annulaire 54. Les branches radialement interne 52a, 54a et externe 52b, 54b de chacune des première partie annulaire 52 et seconde partie annulaire 54 apportent une souplesse au pivot en fonctionnement. Toutefois, comme déjà évoqué précédemment, un tel pivot 40 peut subir des efforts radiaux et tangentiels pouvant conduire à des désalignements de la denture du pignon satellite avec les dentures des planétaires interne et externe.

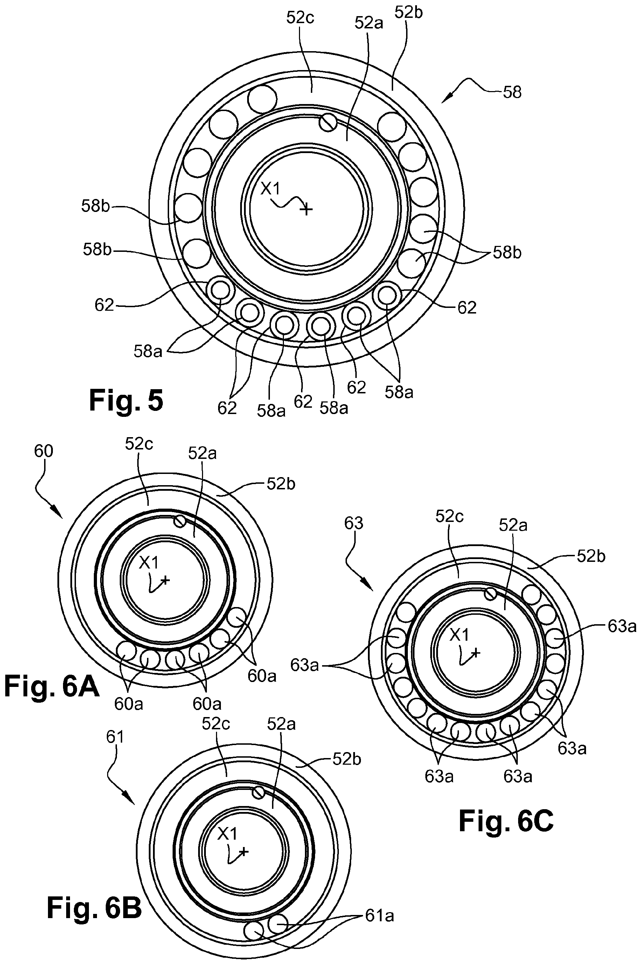

A cette fin, on propose, comme représenté aux figures 5 et 6, dans deux réalisations d'un pivot 58, 60, de réaliser une pluralité de premiers orifices 58a, 60a dans la partie massive du pivot 58, 60. Les premiers orifices 58a, 60a débouchent à une première extrémité dans la première rainure 52 au travers de sa paroi de fond 52d et à une seconde extrémité opposée dans la seconde rainure 54 dans sa paroi de fond 54d. Ces premiers orifices 60a, 60b sont formés sur un secteur angulaire donné correspondant à celui où l'on souhaite augmenter la déformation circonférentielle du pivot afin de compenser une déformation circonférentiellement non uniforme comme dans la technique antérieure.

Dans l'invention, le secteur angulaire comprenant des premiers orifices 58a, 60a est compris entre 05° et 330°. De préférence, le secteur angulaire comprenant des premiers orifices 58a, 60a est compris entre 180° et 330°, de façon à minimiser la masse du pivot 58, 60. Dans l'exemple représenté en figure 5, le secteur angulaire s'étend sur environ 90° à 100°.

On remarque que la première réalisation de la figure 5, les premiers orifices comprennent un lamage 62 formé au débouché de la première extrémité des premiers orifices 58a du pivot 58. Un lamage 62 peut également être formé au débouché des secondes extrémités des premiers orifices 58a du pivot 58. Le pivot 58 de cette réalisation comprend également des seconds orifices 58b qui ont un diamètre plus important que les premiers orifices 58a, ces seconds orifices 58b étant répartis de part et d'autre du secteur angulaire des premiers orifices 58a. Ces seconds orifices 58b permettent de réduire la masse totale du pivot 58. On remarque qu'un secteur angulaire du pivot 58 est dépourvu de seconds orifices pour éviter une interférence avec des conduits de circulation d'huile radiaux ou axiaux.

Une seconde réalisation est représentée aux figures 6A, 6B et 6C. On remarque que sur ces figures, le pivot 60, 61, 63 est dépourvu de seconds orifices. Toutefois, des seconds orifices pourraient également être formés de part et d'autre des premiers orifices 60a, 61a, 63a.

Sur la figure 6A, le pivot 60 comprend des premiers orifices 60a sur un secteur angulaire d'environ 90°. Sur la figure 6B, le pivot 61 comprend des premiers orifices 61a sur un secteur angulaire d'environ 5°. Sur la figure 6C, le pivot 63 comprend des premiers orifices 63a sur un secteur angulaire d'environ 330°.

Les premiers orifices 58a, 60a, 61a, 63a sont ici sensiblement rectilignes et parallèles à l'axe X1 du pivot 58, 60, 61, 63. Toutefois, ces premiers orifices 58a, 60a, 61a, 63a pourraient également être rectilignes mais former un angle non nul avec l'axe X1 qui peut être compris entre ]0°, 30°].

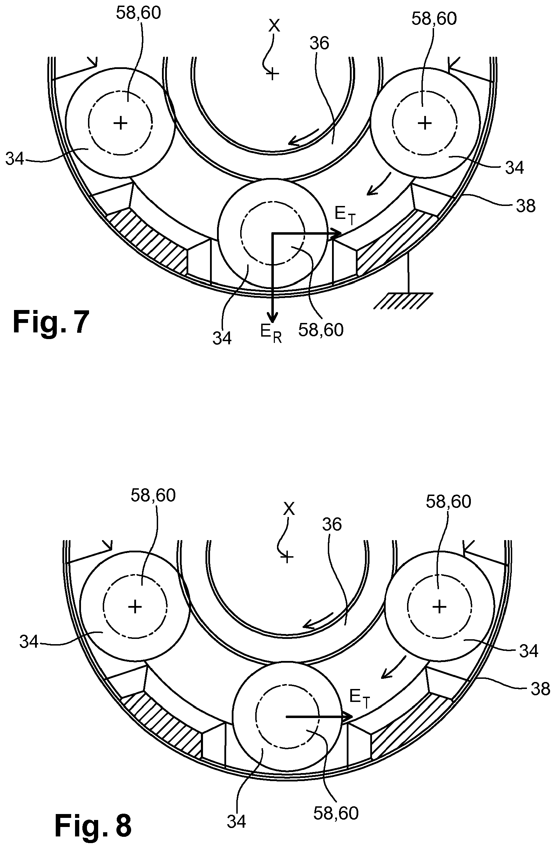

Sur la figure 7, on a schématisé le cas d'un montage de pivots 58, 60 dans une configuration de réducteur de vitesse, donc dans un cas où le pignon central 36 est mobile, mais la couronne extérieure 38 fixe, solidaire d'un carter extérieur, ou d'un virole annulaire, statique 26 du compresseur comme en figure 1, en particulier du compresseur basse pression 18. Comme illustré, des efforts tant tangentiaux E_{T} dus aux couples appliqués, que radiaux E_{R}, dus à la force centrifuge, sont exercés sur chaque pivot 58, 60.

Les parois annulaires 52 des pivots 58, 60, 61, 63 peuvent être avantageusement formées d'une seule pièce de sorte que la première partie 52, la partie intermédiaire 56 et la seconde partie 54 sont formés dans une seule pièce.

Sur la figure 8, un autre cas d'application est schématisé, celui d'un montage de pivots 58, 60, 61, 63 dans une configuration planétaire, donc dans un cas où tant le pignon central 36 que la couronne extérieure 38 sont mobiles en rotation autour de l'axe X du compresseur, en particulier du compresseur basse pression 18. Comme illustré, des efforts tangentiaux E_{T}, dus aux couples appliqués, sont exercés sur chaque pivot 58, 60, 61, 63. Cette situation peut être celle d'un open-rotor ou d'une double soufflante.

## Revendications

1. Pivot (58, 60, 61, 63) pour palier lisse de train épicycloïdal, comprenant une paroi annulaire (50) délimitant un passage axial (51) et comprenant une première (52c) et une seconde (54c) rainures annulaires débouchant axialement dans des sens opposés (L1, L2) et chacune délimitée par deux branches annulaires coaxiales interne (52a, 54a) et externe (52b, 54b) formées aux extrémités axiales de la paroi annulaire (50), **caractérisé en ce qu'**il comprend une pluralité de premiers orifices (58a, 60a, 61a, 63a) débouchant à une première extrémité dans la première rainure annulaire (52c) et à une seconde extrémité opposée dans la seconde rainure annulaire (54c), ces premiers orifices (58a, 60a, 61a, 63a) étant réalisés sur un secteur angulaire compris entre 05° et 330°, de préférence compris entre 180° et 330°.

2. Pivot (58, 60, 61, 63) selon la revendication 1, dans lequel un lamage (62) est prévu au débouché d'au moins l'une de la première extrémité et de la seconde extrémité de chacun des premiers orifices (58a, 60a, 61a, 63a).

3. Pivot selon la revendication 1, dans lequel les premiers orifices (58a, 60a, 61a, 63a) sont sensiblement rectilignes.

4. Pivot selon l'une des revendications 1 à 3, dans lequel les premiers orifices (58a, 60a, 61a, 63a) sont inclinés par rapport à un axe (X1) du passage axial (51), de préférence d'un angle compris entre 0° et 30°.

5. Pivot selon l'une des revendications 1 à 4, dans lequel il comprend des seconds orifices (58b) répartis de part et d'autre des premiers orifices (58a) et débouchant à une première extrémité dans la première rainure (52c) et à une seconde extrémité dans la seconde rainure (54c), les seconds orifices (58b) ayant des caractéristiques dimensionnelles différentes des caractéristiques dimensionnelles des premiers orifices (58a, 60a).

6. Train épicycloïdal d'une turbomachine à gaz pour aéronef, comprenant une couronne extérieure (38) et des pignons satellites (34) en prise avec un pignon central (36) et avec la couronne extérieure (38) et montés chacun libre en rotation sur un porte-satellites (42), les pignons satellites (34) pouvant chacun tourner autour d'un axe de satellite par l'intermédiaire d'un pivot (58, 60) selon l'une quelconque des revendications 1 à 5 qui est coaxial à l'axe d'un pignon satellite.

7. Turbomachine à gaz pour aéronef comprenant un train épicycloïdal selon la revendication 6 dont le pignon central (36) entoure et est solidaire en rotation d'un arbre (30) d'un compresseur de la turbomachine.

8. Turbomachine selon la revendication 7, dans laquelle la couronne extérieure (38) est solidaire d'un carter (44) ou virole annulaire statique d'un compresseur basse pression (18).

## Patentansprüche

1. Drehzapfen (58, 60, 61, 63) für ein Gleitlager eines Planetengetriebes, enthaltend eine Ringwand (50), die einen axialen Durchgang (51) begrenzt und eine erste (52c) und eine zweite (54c) Ringnut aufweist, die axial in entgegengesetzten Richtungen (L1, L2) ausmünden und jeweils durch zwei koaxiale, ringförmige Schenkel, einem inneren (52a, 54a) und einem äußeren (52b, 54b), begrenzt sind, die an den axialen Enden der Ringwand (50) ausgebildet sind,
**dadurch gekennzeichnet, dass** er eine Vielzahl von ersten Öffnungen (58a, 60a, 61a, 63a) aufweist, die an einem ersten Ende in die erste Ringnut (52c) und an einem gegenüberliegenden zweiten Ende in die zweite Ringnut (54c) münden, wobei diese ersten Öffnungen (58a, 60a, 61a, 63a) über einen Winkelsektor zwischen 05° und 330°, vorzugsweise zwischen 180° und 330°, ausgeführt sind.

2. Drehzapfen (58, 60, 61, 63) nach Anspruch 1,
wobei an der Ausmündung von mindestens einem des ersten Endes und des zweiten Endes jeder der ersten Öffnungen (58a, 60a, 61a, 63a) eine Senkbohrung (62) vorgesehen ist.

3. Drehzapfen nach Anspruch 1,
wobei die ersten Öffnungen (58a, 60a, 61a, 63a) im Wesentlichen gerade verlaufen.

4. Drehzapfen nach einem der Ansprüche 1 bis 3,
wobei die ersten Öffnungen (58a, 60a, 61a, 63a) bezüglich einer Achse (X1) des axialen Durchgangs (51) geneigt verlaufen, vorzugsweise um einen Winkel zwischen 0° und 30°.

5. Drehzapfen nach einem der Ansprüche 1 bis 4,
wobei er zweite Öffnungen (58b) aufweist, die auf beiden Seiten der ersten Öffnungen (58a) verteilt sind und an einem ersten Ende in die erste Nut (52c) und an einem zweiten Ende in die zweite Nut (54c) münden,
wobei die zweiten Öffnungen (58b) Abmessungsmerkmale aufweisen, die sich von den Abmessungsmerkmalen der ersten Öffnungen (58a, 60a) unterscheiden.

6. Planetengetriebe eines Gasturbotriebwerks für Luftfahrzeuge, enthaltend ein äußeres Hohlrad (38) und Planetenräder (34), die mit einem Sonnenrad (36) und mit dem äußeren Hohlrad (38) kämmen und jeweils frei drehbar auf einem Planetenradträger (42) gelagert sind,
wobei die Planetenräder (34) jeweils über einen zur Achse eines Planetenrads koaxial verlaufenden Drehzapfen (58, 60) nach einem der Ansprüche 1 bis 5 um eine Planetenradachse drehbar sind.

7. Gasturbotriebwerk für Luftfahrzeuge mit einem Planetengetriebe nach Anspruch 6, dessen Sonnenrad (36) eine Welle (30) eines Verdichters des Turbotriebwerks umgibt und drehfest damit verbunden ist.

8. Turbotriebwerk nach Anspruch 7,
wobei das äußere Hohlrad (38) fest mit einem statischen Gehäuse (44) oder Mantelring eines Niederdruckverdichters (18) verbunden ist.

## Claims

1. Pivot (58, 60, 61, 63) for a sliding bearing of an epicyclic train, comprising an annular wall (50) delimiting an axial passage (51) and comprising a first (52c) and a second (54c) annular grooves opening axially in opposite directions (L1, L2) and each delimited by two coaxial inner (52a, 54a) and outer (52b, 54b) annular branches formed at the axial ends of the annular wall (50), **characterised in that** it comprises a plurality of first holes (58a, 60a, 61a, 63a) opening at a first end into the first annular groove (52c) and at a second opposite end into the second annular groove (54c), these first (58a, 60a, 61a, 63a) holes being produced over an angular sector between 05° and 330°, and preferably between 180° and 330°.

2. Pivot (58, 60, 61, 63) according to claim 1, wherein a counterbore (62) is provided at the opening of at least one of the first end and the second end of each of the first holes (58a, 60a, 61a, 63a).

3. Pivot according to claim 1, wherein the first holes (58a, 60a, 61a, 63a) are substantially straight.

4. Pivot according to one of claims 1 to 3, wherein the first openings (58a, 60a, 61a, 63a) are inclined relative to an axis (X1) of the axial passage (51), preferably by an angle of between 0° and 30°.

5. Pivot according to one of claims 1 to 4, in which it comprises second holes (58b) distributed on either side of the first holes (58a) and opening at a first end into the first groove (52c) and at a second end into the second groove (54c), the second holes (58b) having dimensional characteristics different from the dimensional characteristics of the first holes (58a, 60a).

6. Epicyclic train of an aircraft gas turbine engine, comprising an outer ring gear (38) and planetary pinions (34) meshing with a central pinion (36) and with the outer ring gear (38) and each mounted for free rotation on a planetary carrier (42), each planetary pinion (34) being rotatable about a planetary axis via a pivot (58, 60) according to any one of claims 1 to 5 which is coaxial with the axis of a planetary pinion.

7. Gas turbine engine for aircraft comprising an epicyclic train according to claim 6, the central pinion (36) of which surrounds and is rotationally integral with a shaft (30) of a compressor of the turbine engine.

8. Turbine engine according to claim 7, in which the outer ring (38) is integral with a casing (44) or static annular shroud of a low-pressure compressor (18).
